# EUROPÄISCHE PATENTANMELDUNG

(11) **EP 4 043 369 A1**
(43) Veröffentlichungstag der Anmeldung: **17.08.2022**
(21) Anmeldenummer: 22151384.9
(22) Anmeldetag: 13.01.2022
(51) Int. Cl.: B65G 23/10, B65G 23/44, B65G 45/12

(54) **BANDFÖRDERVORRICHTUNG MIT UMLENKWALZE**

(30) Priorität: 10.02.2021 DE 102021103122
(71) Anmelder: Fritsch Bakery Technologies GmbH & Co. KG, 97348 Markt Einersheim (DE)
(72) Erfinder: DORNER, Fred, 97318 Kitzingen (DE)
(74) Vertreter: Grünecker Patent- und Rechtsanwälte PartG mbB

(57) **Zusammenfassung**

Eine Bandfördervorrichtung (1) zum Fördern von Lebensmittelprodukten (4) mit einem Gestell (2), einem Förderband (3) und einer Antriebsvorrichtung (6), die zum Antreiben des Förderbands (3) konfiguriert ist. Die Antriebsvorrichtung (6) umfasst eine Antriebswalze (8), die zum Antreiben des Förderbands (3) konfiguriert ist, eine erste Umlenkwalze (9), die zum Führen des Förderbands (3) konfiguriert ist, eine zweite Umlenkwalze (10), die zum Führen des Förderbands (3) konfiguriert ist, und eine erste Verriegelungsvorrichtung (11), die dazu konfiguriert ist, die erste Umlenkwalze (9) in einer Betriebsposition (S) zu sichern, und einen ersten Eingreifschutz (12), der dazu konfiguriert ist, eine erste Fuge (13) zwischen der ersten Umlenkwalze (9) und dem Förderband (3) abzudecken, wenn die erste Verriegelungsvorrichtung (11) die erste Umlenkwalze (9) in der Betriebsposition (S) sichert.

## Beschreibung

Die Erfindung bezieht sich auf eine Bandfördervorrichtung zum Fördern von Lebensmittelprodukten, insbesondere Teig.

Bandfördervorrichtungen zum Fördern von Lebensmittelprodukten müssen hohe Hygieneanforderungen erfüllen. Dazu ist es wichtig, dass sie regelmäßig gründlich gereinigt werden. Eine gründliche Reinigung erfordert unter anderem, dass Komponenten, die direkt oder indirekt mit den geförderten Produkten in Kontakt kommen für das Reinigungspersonal zugänglich sind. Während des Betriebs dürfen manche Bereiche jedoch nicht für Menschen zugänglich sein, da diese sonst einer Verletzungsgefahr ausgesetzt wären. Bei herkömmlichen Vorrichtungen werden daher häufig Abdeckungen oder Verschalungen für solche Bereiche vorgesehen. Diese können zum einen zu zeitaufwendigen Reinigungspausen führen, da sie aufwendig de-und wieder remontiert werden müssen. Zum anderen können sie die Komplexität und Störanfälligkeit selbst dann erhöhen, wenn sie nur abgenommen werden müssen, denn in solchen Fällen muss der Status der Abdeckung überwacht werden, sodass der Betrieb der Vorrichtung unterbrochen oder gar nicht erst gestartet wird, wenn die Abdeckung nicht an ihrer ordnungsgemäßen Position angeordnet ist. All dies kann zu einer reduzierten Effizienz der Vorrichtung führen, da Betriebszeiten verkürzt und der Aufwand für das Reinigungspersonal erhöht wird.

Es ist daher eine Aufgabe der Erfindung, eine Bandfördervorrichtung anzugeben, deren Effizienz durch konstruktiv möglichst einfache Maßnahmen verbessert ist. Diese Aufgabe wird erfindungsgemäß gelöst durch eine Bandfördervorrichtung mit den Merkmalen des Anspruchs 1. Vorteilhafte Weiterbildungen sind in den abhängigen Ansprüchen angegeben.

Es wird eine Bandfördervorrichtung zum Fördern von Lebensmittelprodukten, insbesondere Teig, mit einem Gestell, einem Förderband und einer Antriebsvorrichtung, die zum Antreiben des Förderbands konfiguriert ist, beschrieben. Die Antriebsvorrichtung umfasst eine Antriebswalze, die zum Antreiben des Förderbands konfiguriert ist, eine erste Umlenkwalze, die zum Führen des Förderbands konfiguriert ist, eine zweite Umlenkwalze, die zum Führen des Förderbands konfiguriert ist, eine erste Verriegelungsvorrichtung, die dazu konfiguriert ist, die erste Umlenkwalze in einer Betriebsposition zu sichern, und einen ersten Eingreifschutz, welcher dazu konfiguriert ist, eine erste Fuge zwischen der ersten Umlenkwalze und dem Förderband abzudecken, wenn die Verriegelungsvorrichtung die erste Umlenkwalze in der Betriebsposition sichert. Insbesondere kann die erste Verriegelungsvorrichtung dazu konfiguriert sein, den ersten Eingreifschutz derart zu halten, dass er die erste Fuge zwischen der ersten Umlenkwalze und dem Förderband abdeckt, wenn die Verriegelungsvorrichtung die erste Umlenkwalze in der Betriebsposition sichert. Vorzugsweise ist die Verriegelungsvorrichtung dazu konfiguriert, die erste Umlenkwalze in einer Betriebsposition zu sichern und einen ersten Eingreifschutz nur dann derart zu halten, dass er eine erste Fuge zwischen der ersten Umlenkwalze und dem Förderband abdeckt, wenn die Verriegelungsvorrichtung die erste Umlenkwalze in der Betriebsposition sichert.

Die erste und/oder die zweite Umlenkwalze kann/können dazu konfiguriert sein, in einer Betriebsposition das Förderband derart zu führen, dass es eine höhere Spannung aufweist als wenn die erste und/oder die zweite Umlenkwalze nicht in der jeweiligen Betriebsposition angeordnet ist/sind. Die erste Fuge kann auf einer Seite der ersten Umlenkwalze angeordnet sein, auf der das Förderband während des Betriebs der Bandfördervorrichtung auf die erste Umlenkwalze zu läuft. Als abdeckend können Strukturen angesehen werden, die ein Passieren von menschlichen Körperteilen, insbesondere Gliedmaßen, besonders bevorzugt Finger, zuverlässig verhindern. Es ist also denkbar, dass der Eingreifschutz Öffnungen aufweist, die entsprechend dimensioniert sind. Bevorzugt ist es jedoch, dass der Eingreifschutz keine Öffnungen aufweist.

Dadurch, dass der Eingreifschutz, vorzugsweise durch die Verriegelungsvorrichtung, derart gehalten wird, dass er die erste Fuge zwischen der ersten Umlenkwalze und dem Förderband abdeckt, wenn die Verriegelungsvorrichtung die erste Umlenkwalze in der Betriebsposition sichert, kann im Betrieb der Bandfördervorrichtung ein Einziehen menschlicher Körperteile in die Fuge zwischen der ersten Umlenkwalze und dem Förderband verhindert werden. Ist die Verriegelungsvorrichtung entriegelt, ist der Eingreifschutz zwar möglicherweise nicht mehr derart angeordnet, dass er die erste Fuge zwischen der ersten Umlenkwalze und dem Förderband abdeckt. Dann sichert sie jedoch auch die erste Umlenkwalze nicht mehr in der Betriebsposition. Dies führt dazu, dass die Bandspannung des Förderbands und somit auch die Reibung sowie die Klemmkraft zwischen der ersten Umlenkwalze und dem Förderband reduziert ist. Dadurch kann das Risiko, dass menschliche Körperteile in die Fuge zwischen der ersten Umlenkwalze und dem Förderband eingezogen werden, reduziert oder eliminiert werden. Dadurch kann ein Verzicht auf eine, bspw. elektronische, Überwachung ermöglicht werden, wodurch die Störanfälligkeit reduziert werden kann. Außerdem können durch die oben beschriebene Konfiguration zwei Arbeitsschritte kombiniert und dadurch Zeit eingespart werden, nämlich das Entfernen des Eingreifschutzes und die Entspannung des Förderbands. Letzteres kann bei der Reinigung der Bandfördervorrichtung notwendig sein, da es die Reinigung der das Förderband führenden Komponenten ermöglicht.

Es kann vorteilhaft sein, wenn die erste und/oder die zweite Umlenkwalze schwenkbar an dem Gestell angeordnet, insbesondere schwenkbar befestigt, ist/sind. Dadurch kann der Reinigungsprozess weiter beschleunigt werden, da die schwenkbar an dem Gestell angeordnete, insbesondere schwenkbar befestigte, Umlenkwalze während dem Reinigen am Gestell gehalten werden kann und kein Abstellort aufgesucht werden muss. Dieser Vorteil kann eine umso höhere Bedeutung aufweisen, da ein Ablegen der Umlenkwalze auf dem Boden unvorteilhaft oder sogar nicht gestattet sein kann. Die Antriebsvorrichtung kann z. B. einen ersten Schwenkarm aufweisen. Der erste Schwenkarm kann schwenkbar mit dem Gestell verbunden sein. Die erste Umlenkwalze kann drehbar an dem Schwenkarm gelagert sein. Die erste Verriegelungsvorrichtung kann schwenkbar mit der ersten Umlenkwalze verbunden sein. Insbesondere kann die erste Verriegelungsvorrichtung schwenkbar an dem ersten Schwenkarm angeordnet sein. Der Eingreifschutz kann beweglich oder unbeweglich mit dem Schwenkarm verbunden sein.

Die Bandfördervorrichtung kann vorteilhafterweise des Weiteren eine zweite Verriegelungsvorrichtung, die dazu konfiguriert ist, die zweite Umlenkwalze in einer Betriebsposition zu sichern, und einen zweiten Eingreifschutz umfassen, welcher dazu konfiguriert ist, eine zweite Fuge zwischen der zweiten Umlenkwalze und dem Förderband abzudecken, wenn die zweite Verriegelungsvorrichtung die zweite Umlenkwalze in der Betriebsposition sichert. Insbesondere kann die zweite Verriegelungsvorrichtung dazu konfiguriert sein, den zweiten Eingreifschutz derart zu halten, dass er die zweite Fuge zwischen der zweiten Umlenkwalze und dem Förderband abdeckt, wenn die Verriegelungsvorrichtung die zweite Umlenkwalze in der Betriebsposition sichert. Die vorstehenden auf die erste Verriegelungsvorrichtung, den Eingreifschutz und den Schwenkarm bezogenen Erläuterungen können auf die zweite Verriegelungsvorrichtung und/oder die zweite Umlenkwalze analog anwendbar sein.

Es ist denkbar, dass die erste Verriegelungsvorrichtung schwenkbar mit der ersten Umlenkwalze verbunden ist. Ähnlich wie weiter oben mit Bezug auf die schwenkbare Befestigung der ersten Umlenkwalze an dem Gestell erläutert, kann eine schwenkbare Verbindung zwischen der ersten Umlenkwalze und der ersten Verriegelungsvorrichtung vorteilhaft die Aufbewahrung der Verriegelungsvorrichtung während des Reinigungsprozesses erleichtern. Besonders günstig kann es sein, wenn die zweite Verriegelungsvorrichtung schwenkbar mit der zweiten Umlenkwalze verbunden ist.

Es ist vorstellbar, dass die erste Verriegelungsvorrichtung durch Schwenken relativ zu der ersten Umlenkwalze lösbar und/oder verriegelbar ist. Dies kann eine besonders einfache Art der Betätigung darstellen. Besonders günstig kann es sein, wenn die zweite Verriegelungsvorrichtung durch Schwenken relativ zu der zweiten Umlenkwalze lösbar und/oder verriegelbar ist.

Es kann vorteilhaft sein, wenn an der ersten Verriegelungsvorrichtung ein Abstreifer angeordnet ist, der zum Eingreifen mit der ersten Umlenkwalze konfiguriert ist. Dadurch kann eine separate Befestigungsvorrichtung für den Abstreifer eingespart werden. Besonders günstig kann es sein, wenn an der zweiten Verriegelungsvorrichtung ein Abstreifer angeordnet ist, der zum Eingreifen mit der zweiten Umlenkwalze konfiguriert ist.

Vorteilhafterweise kann der Abstreifer dazu konfiguriert sein, durch Schwenken der Verriegelungsvorrichtung mit der Umlenkwalze in Eingriff gebracht zu werden. Auch dadurch kann der Reinigungsprozess weiter vereinfacht werden, da zur Reinigung der jeweiligen Umlenkwalze das Entfernen eines mit ihr eingreifenden Abstreifers erforderlich sein kann. Insbesondere, wenn, wie weiter oben beschreiben, die erste und/oder zweite Verriegelungsvorrichtung durch Schwenken relativ zu der ersten und/oder zweiten Umlenkwalze lösbar und/oder verriegelbar ist, ergibt sich weiteres Beschleunigungspotenzial, da ein Lösen der Verriegelungsvorrichtung gleichzeitig mit einem Entfernen des Abstreifers von der jeweiligen Umlenkwalze erfolgen kann.

Es ist denkbar, dass die erste und die zweite Umlenkwalze dazu konfiguriert sind, das Förderband derart zu spannen, dass es die Antriebswalze mit einem Umschlingungswinkel umschlingt, der größer als 180° ist. Durch den höheren Umschlingungswinkel kann die Übertragung der Antriebskraft von der Antriebswalze auf das Förderband effizienter erfolgen.

Die Bandfördervorrichtung kann des Weiteren einen ersten Halter umfassen, der dazu konfiguriert ist, die erste Umlenkwalze in einer Aufbewahrungsposition zu halten. Dadurch kann eine sichere Aufbewahrung der ersten Umlenkwalze während des Reinigungsprozesses ermöglicht werden. Das Vorsehen eines Halters kann sowohl in Kombination mit einer schwenkbaren ersten Umlenkwalze, wie sie weiter oben beschrieben ist, vorteilhaft sein als auch in Kombination mit einer nicht schwenkbaren ersten Umlenkwalze. Es kann besonders günstig sein, wenn die Bandfördervorrichtung des Weiteren einen zweiten Halter umfasst, der dazu konfiguriert ist, die zweite Umlenkwalze in einer Aufbewahrungsposition zu halten. Der erste Halter kann an dem Gestell vorgesehen sein. Insbesondere bei einer schwenkbaren ersten Umlenkwalze kann es sich um eine Vorrichtung handeln, die ein Schwenken in Richtung der Betriebsposition oder zu weit von der Betriebsposition fort blockiert, zum Beispiel um einen Haken oder einen Anschlag halten. Die Erläuterungen bezüglich des ersten Halters und der ersten Umlenkwalze können analog auf den zweiten Halter und die zweite Umlenkwalze anwendbar sein.

Es ist vorstellbar, dass die Verriegelungsvorrichtung ein Verriegelungsglied aufweist, wobei die Verriegelungsvorrichtung durch Schwenken in eine Verriegelungsposition bringbar ist, in welcher das Verriegelungsglied dazu konfiguriert ist, mit einem Halteelement einzugreifen, das an dem Gestell vorgesehen ist. Besonders günstig kann es sein, wenn das Verriegelungsglied ein Riegel oder ein Haken und das Halteelement eine Riegelhalterung oder ein Bolzen ist. Ein Riegel oder ein Haken kann eine besonders einfache und leicht zu reinigende Art von Verriegelungsmechanismus darstellen.

Vorteilhafterweise kann die Verriegelungsvorrichtung durch Schwenken in eine Entriegelungsposition bringbar sein, in welcher das Verriegelungsglied dazu konfiguriert ist, an dem Halteelement vorbei und/oder durch dieses hindurch geführt zu werden.

Besonders vorteilhaft kann es sein, wenn die Verriegelungsvorrichtung derart konfiguriert ist, dass durch das Eingreifen des Riegels mit der Riegelhalterung der Abstreifer zum Eingreifen mit der Umlenkwalze ausgerichtet wird. Dadurch kann nach der Reinigung eine Inbetriebnahme der Bandfördervorrichtung beschleunigt werden.

In Ausführungsformen mit zwei oder mehreren Verriegelungsvorrichtungen und/oder Umlenkwalzen können die obigen Ausführungen auf eine, mehrere oder alle davon anwendbar sein.

Die Erfindung bezieht sich auf eine Bandfördervorrichtung der vorstehend beschriebenen Art. Im Folgenden wir ein vorteilhaftes Ausführungsbeispiel anhand von Zeichnungen näher erläutert.
- Figur 1: zeigt eine perspektivische schematische Ansicht einer Bandfördervorrichtung.
- Figur 2: zeigt eine schematische Schnittansicht einer Antriebsvorrichtung der Bandfördervorrichtung, wobei zwei Umlenkwalzen in einer Betriebsposition angeordnet und zwei entsprechende Verriegelungsvorrichtungen verriegelt sind.
- Figur 3: zeigt die Ansicht aus Figur 2, wobei die zwei Verriegelungsvorrichtungen entriegelt sind.

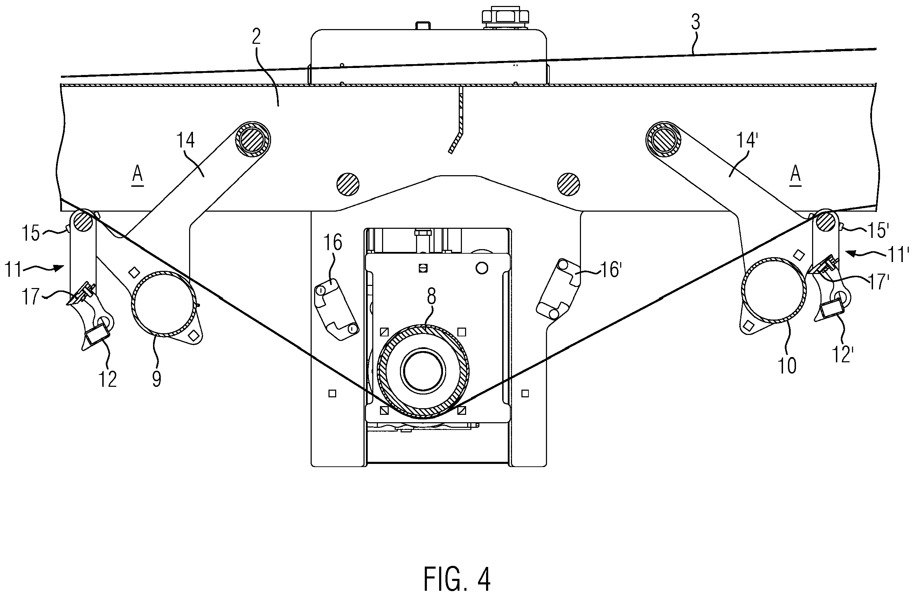

- Figur 4: zeigt die Ansicht aus den Figuren 2 und 3, wobei die Umlenkwalzen in einer Aufbewahrungsposition angeordnet sind.

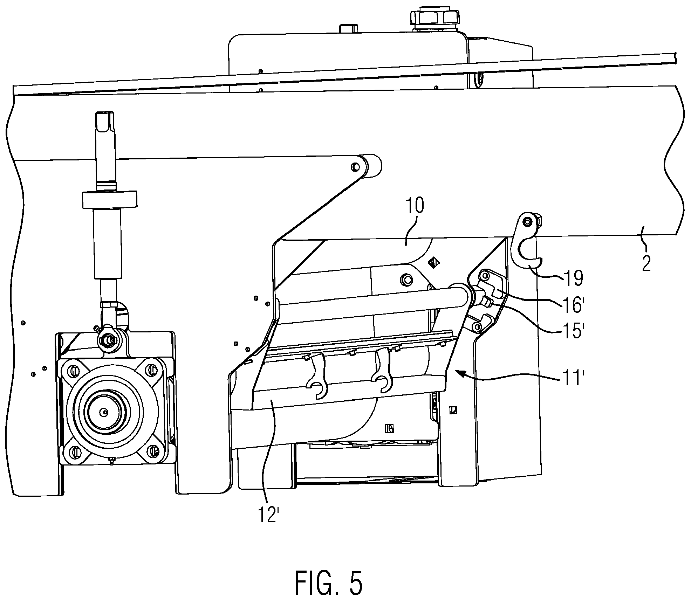

- Figur 5: zeigt eine schematische, perspektivische Detailansicht der Bandfördervorrichtung

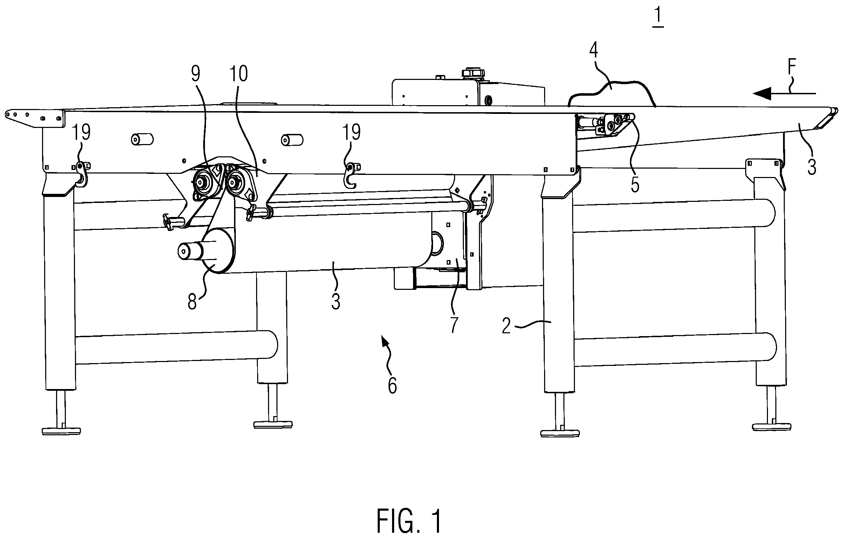

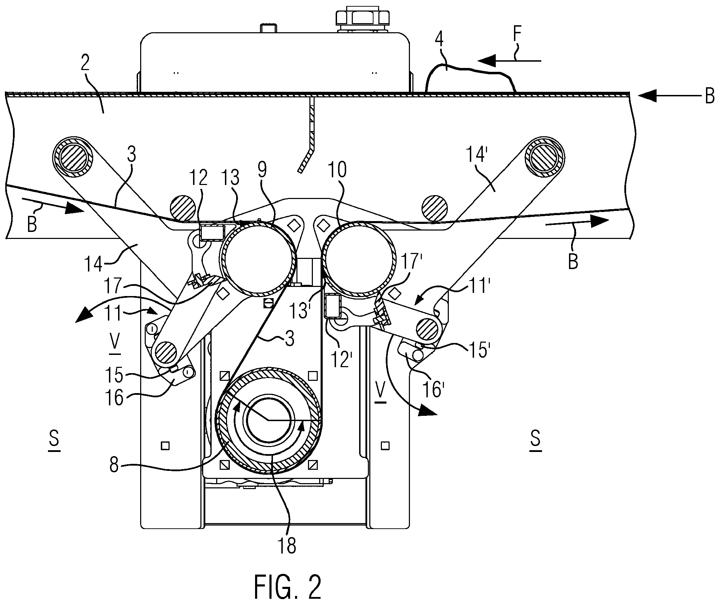

In Figur 1 ist eine Bandfördervorrichtung 1 in einer schematischen, perspektivischen Ansicht dargestellt. Die Bandfördervorrichtung 1 kann ein Gestell 2 aufweisen. Des Weiteren kann die Bandfördervorrichtung 1 ein Förderband 3 aufweisen. Das Förderband 3 kann dazu konfiguriert sein, ein Lebensmittelprodukt 4, im vorliegenden Ausführungsbeispiel Teig, in einer Förderrichtung F zu fördern. Dabei kann das Förderband 3 durch verschiedene Führungselemente 5 führbar sein. Die Führungselemente 5 können an dem Gestell 2 angeordnet sein. Das Förderband 3 kann in einer Bandlaufrichtung B (siehe Figur 2) bewegbar sein. Die Bandlaufrichtung B kann zumindest abschnittsweise parallel, insbesondere identisch, zu der Förderrichtung F orientiert sein.

Die Bandfördervorrichtung 1 kann eine Antriebsvorrichtung 6 umfassen. Die Antriebsvorrichtung 6 kann zum Antreiben des Förderbands 3 konfiguriert sein. Die Antriebsvorrichtung 6 kann eine Antriebseinheit 7 umfassen, die zum Beispiel einen Motor und/oder ein Getriebe enthalten kann. Die Antriebsvorrichtung 6 kann des Weiteren eine Antriebswalze 8 aufweisen. Die Antriebseinheit 7 kann zum Antreiben der Antriebswalze 8 konfiguriert sein. Die Antriebswalze 8 kann dazu konfiguriert sein, das Förderband 3 anzutreiben. Die Antriebsvorrichtung 6 kann eine erste Umlenkwalze 9 umfassen. Die erste Umlenkwalze 9 kann zum Führen des Förderbands 3 konfiguriert sein. Die Antriebsvorrichtung 6 kann des Weiteren eine zweite Umlenkwalze 10 umfassen. Die zweite Umlenkwalze 10 kann ähnlich der ersten Umlenkwalze, zum Führen des Förderbands 3 konfiguriert sein.

In Figur 2 ist die Antriebsvorrichtung 6 in einer schematischen Schnittansicht dargestellt. Die erste Umlenkwalze 9 und die zweite Umlenkwalze 10 sind jeweils in einer Betriebsposition S dargestellt. In Figur 2 ist außerdem zu erkennen, dass die Antriebsvorrichtung 6 eine erste Verriegelungsvorrichtung 11 aufweisen kann. Des Weiteren kann die Antriebsvorrichtung 6 einen ersten Eingreifschutz 12 aufweisen. Der erste Eingreifschutz 12 kann dazu eingerichtet sein, eine erste Fuge 13 zwischen dem Förderband 3 und der ersten Umlenkwalze 9 abzudecken. Der Eingreifschutz 12 kann an der ersten Verriegelungsvorrichtung 11 angeordnet, insbesondere befestigt sein. Die erste Verriegelungsvorrichtung 11 kann dazu konfiguriert sein, die erste Umlenkwalze 9 in einer Betriebsposition S zu sichern und den ersten Eingreifschutz 12 derart zu halten, dass er die erste Fuge 13 zischen der ersten Umlenkwalze 9 und dem Förderband 3 abdeckt, wenn die erste Verriegelungsvorrichtung 11 die erste Umlenkwalze 9 in der Betriebsposition S sichert.

Die erste Umlenkwalze 9 kann schwenkbar an dem Gestell 2 angeordnet, insbesondere schwenkbar an dem Gestell 2 befestigt, sein. Dazu kann die Antriebsvorrichtung 6 einen ersten Schwenkarm 14 aufweisen. Der erste Schwenkarm 14 kann schwenkbar mit dem Gestell 2 verbunden sein. Die erste Umlenkwalze 9 kann drehbar an dem Schwenkarm 14 gelagert sein. Die erste Verriegelungsvorrichtung 11 kann schwenkbar mit der ersten Umlenkwalze 9 verbunden sein. Insbesondere kann die erste Verriegelungsvorrichtung 11 schwenkbar an dem ersten Schwenkarm 14 angeordnet sein.

Die erste Verriegelungsvorrichtung 11 kann einen ersten Riegel 15 aufweisen. Der erste Riegel 15 kann dazu konfiguriert sein, mit einer ersten Riegelhalterung 16 einzugreifen. Die erste Riegelhalterung 16 kann an dem Gestell 2 vorgesehen sein. In Figur 2 ist die erste Verriegelungsvorrichtung 11 in einer Verriegelungsposition V dargestellt. In der Verriegelungsposition V kann der erste Riegel 15 mit der ersten Riegelaufnahme 16 eingreifen, sodass die Verriegelungsvorrichtung 11 in der Verriegelungsposition V gehalten wird. In der Verriegelungsposition V kann die erste Verriegelungsvorrichtung 11 die erste Umlenkwalze 9 in der Betriebsposition S sichern. Durch Schwenken der Verriegelungsvorrichtung 11 aus der Verriegelungsposition V heraus kann der Eingriff zwischen dem ersten Riegel 15 und der ersten Regelaufnahme 16 gelöst werden, wodurch auch die erste Verriegelungsvorrichtung 11 aus der Verriegelungsposition V gelöst werden kann.

Des Weiteren ist in Figur 2 zu erkennen, dass die Antriebsvorrichtung 6 einen ersten Abstreifer 17 enthalten kann. Der erste Abstreifer 17 kann an der ersten Verriegelungsvorrichtung 11 angeordnet sein. Der erste Abstreifer 17 kann zum Eingreifen mit der ersten Umlenkwalze 9 konfiguriert sein. Ein Fachmann erkennt anhand der Zeichnungen, dass der erste Abstreifer 17 dazu konfiguriert sein kann, durch Schwenken der ersten Verriegelungsvorrichtung 11 mit der ersten Umlenkwalze 9 in Eingriff gebracht zu werden. Es ist darüber hinaus erkennbar, dass die erste Verriegelungsvorrichtung 11 derart konfiguriert sein kann, dass durch das Eingreifen des ersten Riegels 15 mit der ersten Riegelhalterung 16 der erste Abstreifer 17 zum Eingreifen mit der ersten Umlenkwalze 9 ausgerichtet wird.

In Figur 2 ist außerdem zu erkennen, dass die Antriebsvorrichtung 6 zusätzlich zu der ersten Verriegelungsvorrichtung 11 eine zweite Verriegelungsvorrichtung 11' aufweisen kann. Des Weiteren kann die Antriebsvorrichtung 6 einen zweiten Eingreifschutz 12' aufweisen. Der zweite Eingreifschutz 12' kann dazu eingerichtet sein, eine zweite Fuge 13' zwischen dem Förderband 3 und der zweiten Umlenkwalze 10 abzudecken. Der Eingreifschutz 12' kann an der zweiten Verriegelungsvorrichtung 11' angeordnet, insbesondere befestigt sein. Die zweite Verriegelungsvorrichtung 11' kann dazu konfiguriert sein, die zweite Umlenkwalze 10 in einer Betriebsposition S zu sichern und den zweiten Eingreifschutz 12' derart zu halten, dass er die zweite Fuge 13' zischen der zweiten Umlenkwalze 10 und dem Förderband 3 abdeckt, wenn die zweite Verriegelungsvorrichtung 11' die zweite Umlenkwalze 10 in der Betriebsposition S sichert.

Die zweite Umlenkwalze 10 kann, ähnlich der ersten Umlenkwalze 9, schwenkbar an dem Gestell 2 angeordnet, insbesondere schwenkbar an dem Gestell 2 befestigt, sein. Dazu kann die Antriebsvorrichtung 6 einen zweiten Schwenkarm 14' aufweisen. Der zweite Schwenkarm 14' kann schwenkbar mit dem Gestell 2 verbunden sein. Die zweite Umlenkwalze 10 kann drehbar an dem Schwenkarm 14' gelagert sein. Die zweite Verriegelungsvorrichtung 11' kann schwenkbar mit der zweiten Umlenkwalze 10 verbunden sein. Insbesondere kann die zweite Verriegelungsvorrichtung 11' schwenkbar an dem zweiten Schwenkarm 14' angeordnet sein.

Die zweite Verriegelungsvorrichtung 11' kann einen zweiten Riegel 15' aufweisen. Der zweite Riegel 15' kann dazu konfiguriert sein, mit einer zweiten Riegelhalterung 16' einzugreifen. Die zweite Riegelhalterung 16' kann an dem Gestell 2 vorgesehen sein. In Figur 2 ist die zweite Verriegelungsvorrichtung 11' in einer Verriegelungsposition V dargestellt. In der Verriegelungsposition V kann der zweite Riegel 15' mit der zweiten Riegelaufnahme 16' eingreifen, sodass die Verriegelungsvorrichtung 11' in der Verriegelungsposition V gehalten wird. In der Verriegelungsposition V kann die zweite Verriegelungsvorrichtung 11' die zweite Umlenkwalze 10 in der Betriebsposition S sichern. Durch Schwenken der Verriegelungsvorrichtung 11' aus der Verriegelungsposition V heraus kann der Eingriff zwischen dem zweiten Riegel 15' und der zweiten Riegelaufnahme 16' gelöst werden, wodurch auch die zweite Verriegelungsvorrichtung 11' aus der Verriegelungsposition V gelöst werden kann.

Des Weiteren ist in Figur 2 zu erkennen, dass die Antriebsvorrichtung 6 einen zweiten Abstreifer 17' enthalten kann. Der zweite Abstreifer 17' kann an der zweiten Verriegelungsvorrichtung 11' angeordnet sein. Der zweite Abstreifer 17' kann zum Eingreifen mit der zweiten Umlenkwalze 10 konfiguriert sein. Ein Fachmann erkennt anhand der Zeichnungen, dass der zweite Abstreifer 17' dazu konfiguriert sein kann, durch Schwenken der zweiten Verriegelungsvorrichtung 11' mit der zweiten Umlenkwalze 10 in Eingriff gebracht zu werden. Es ist darüber hinaus erkennbar, dass die zweite Verriegelungsvorrichtung 11' derart konfiguriert sein kann, dass durch das Eingreifen des zweiten Riegels 15' mit der zweiten Riegelhalterung 16' der zweite Abstreifer 17' zum Eingreifen mit der zweiten Umlenkwalze 10 ausgerichtet wird.

Darüber hinaus ist aus Figur 2 ersichtlich, dass die erste Umlenkwalze 9 und die zweite Umlenkwalze 10 dazu konfiguriert sind, das Förderband 3 derart zu spannen, dass es die Antriebswalze 8 mit einem vorbestimmten Umschlingungswinkel 18 umschlingt. Wie hier im mit Bezug auf Figur 2 erläuterten Ausführungsbeispiel gezeigt, kann der Umschlingungswinkel 18 größer als 180° sein.

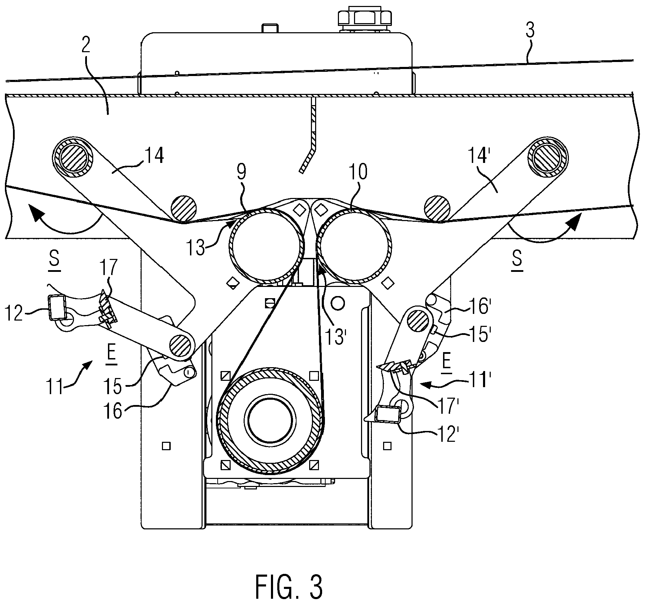

In Figur 3 ist eine Schnittansicht der Antriebsvorrichtung 6 aus der gleichen Perspektive dargestellt wie in Figur 2. Die erste Verriegelungsvorrichtung 11 und die zweite Verriegelungsvorrichtung 11' sind jeweils in einer Entriegelungsposition E dargestellt. In der gezeigten Entriegelungsposition E können der erste Riegel 15 und oder der zweite Riegel 15' dazu konfiguriert sein, an der ersten Riegelhalterung 16 und der zweiten Riegelhalterung 16' vorbei und oder durch diese hindurchgeführt zu werden. Dadurch kann ermöglicht werden, dass die erste Umlenkwalze 9 und oder die zweite Umlenkwalze 10 aus der Betriebsposition S, in der beide Umlenkwalzen in Figur 3 noch dargestellt sind, heraus schwenkbar sind.

Nach Herausschwenken der ersten Umlenkwalze 9 und der zweiten Umlenkwalze 10 aus der jeweiligen Betriebsposition S können beide oder auch nur jeweils eine von ihnen in einer Aufbewahrungsposition A lagerbar sein. Es können Halter 19 an dem Gestell 2 angeordnet sein. Die Halter 19 können dazu konfiguriert sein, die erste Umlenkwalze 9 und oder die zweite Umlenkwalze 10 in der Aufbewahrungsposition A zu halten.

## Patentansprüche

1. Bandfördervorrichtung (1) zum Fördern von Lebensmittelprodukten (4) mit einem Gestell (2), einem Förderband (3) und einer Antriebsvorrichtung (6), die zum Antreiben des Förderbands (3) konfiguriert ist, wobei die Antriebsvorrichtung (6) umfasst:
eine Antriebswalze (8), die zum Antreiben des Förderbands (3) konfiguriert ist,
eine erste Umlenkwalze (9), die zum Führen des Förderbands (3) konfiguriert ist,
eine zweite Umlenkwalze (10), die zum Führen des Förderbands (3) konfiguriert ist,
eine erste Verriegelungsvorrichtung (11), die dazu konfiguriert ist, die erste Umlenkwalze (9) in einer Betriebsposition (S) zu sichern, und
einen ersten Eingreifschutz (12), welcher dazu konfiguriert ist, eine erste Fuge (13) zwischen der ersten Umlenkwalze (9) und dem Förderband (3) abzudecken, wenn die erste Verriegelungsvorrichtung (11) die erste Umlenkwalze (9) in der Betriebsposition (S) sichert.

2. Bandfördervorrichtung nach Anspruch 1, wobei die erste und/oder die zweite Umlenkwalze (9, 10) schwenkbar an dem Gestell (2) angeordnet ist/sind.

3. Bandfördervorrichtung nach einem der vorangehenden Ansprüche, des Weiteren umfassend eine zweite Verriegelungsvorrichtung (11') die dazu konfiguriert ist, die zweite Umlenkwalze (10) in einer Betriebsposition (S) zu sichern, und einen zweiten Eingreifschutz (12'), welcher dazu konfiguriert ist, eine zweite Fuge (13') zwischen der zweiten Umlenkwalze (10) und dem Förderband (3) abzudecken, wenn die zweite Verriegelungsvorrichtung (11') die zweite Umlenkwalze (10) in der Betriebsposition (S) sichert.

4. Bandfördervorrichtung nach einem der vorangehenden Ansprüche, wobei die erste und/oder die zweite Verriegelungsvorrichtung (11, 11') schwenkbar mit der ersten Umlenkwalze (9) verbunden ist.

5. Bandfördervorrichtung nach einem der vorangehenden Ansprüche, wobei die erste und/oder die zweite Verriegelungsvorrichtung (11, 11') durch Schwenken relativ zu der ersten bzw. zweiten Umlenkwalze (9, 10) lösbar und/oder verriegelbar ist.

6. Bandfördervorrichtung nach einem der vorangehenden Ansprüche, wobei an der ersten und/oder der zweiten Verriegelungsvorrichtung (11, 11') ein Abstreifer (17, 17') angeordnet ist, der zum Eingreifen mit der ersten bzw. zweiten Umlenkwalze (9, 10) konfiguriert ist.

7. Bandfördervorrichtung nach Anspruch 6, wobei der Abstreifer (17, 17') dazu konfiguriert ist, durch Schwenken der ersten und/oder zweiten Verriegelungsvorrichtung (11, 11') mit der Umlenkwalze (9, 10) in Eingriff gebracht zu werden.

8. Bandfördervorrichtung nach einem der vorangehenden Ansprüche, wobei die erste und die zweite Umlenkwalze (9, 10) dazu konfiguriert sind, das Förderband derart zu spannen, dass es die Antriebswalze (8) mit einem Umschlingungswinkel (18) umschlingt, der größer als 180° ist.

9. Bandfördervorrichtung nach einem der vorangehenden Ansprüche, des Weiteren umfassend einen Halter (19), der dazu konfiguriert ist, die erste Umlenkwalze (9) in einer Aufbewahrungsposition (A) zu halten.

10. Bandfördervorrichtung nach einem der vorangehenden Ansprüche, wobei die erste und/oder die zweite Verriegelungsvorrichtung (11, 11') ein Verriegelungsglied (15, 15') aufweist, wobei die Verriegelungsvorrichtung (11, 11') durch Schwenken in eine Verriegelungsposition (V) bringbar ist, in welcher das Verriegelungsglied (15, 15') dazu konfiguriert ist, mit einem Halteelement (16, 16') einzugreifen, die an dem Gestell (2) vorgesehen ist.

11. Bandfördervorrichtung nach Anspruch 10, wobei das Verriegelungsglied (15, 15') ein Riegel (15, 15') und das Halteelement (16, 16') eine Riegelhalterung (16, 16') ist.

12. Bandfördervorrichtung nach Anspruch 10 oder 11, wobei die Verriegelungsvorrichtung (11, 11') durch Schwenken in eine Entriegelungsposition (E) bringbar ist, in welcher das Verriegelungsglied (15, 15') dazu konfiguriert ist, an dem Halteelement (16, 16') vorbei und/oder durch dieses hindurch geführt zu werden.

13. Bandfördervorrichtung nach den Ansprüchen 6 und 11, wobei die Verriegelungsvorrichtung (11, 11') derart konfiguriert ist, dass durch das Eingreifen des Riegels (15, 15') mit der Riegelhalterung (16, 16') der Abstreifer (17, 17') zum Eingreifen mit der Umlenkwalze (9, 10) ausgerichtet wird.
